## Europäisches Patentamt
## European Patent Office
## Office européen des brevets

(19)

(11) Veröffentlichungsnummer: **0 303 000 B1**

(12) # EUROPÄISCHE PATENTSCHRIFT

(45) Veröffentlichungstag der Patentschrift:
27.03.91 Patentblatt 91/13

(51) Int. Cl.⁵: **B23Q 7/04**, B25J 15/10,
B23B 31/12

(21) Anmeldenummer: 88106678.1

(22) Anmeldetag: 26.04.88

(54) Vorrichtung zum Zentrieren und Spannen von Werkstücken.

(30) Priorität: 14.07.87 DE 3723249

(43) Veröffentlichungstag der Anmeldung:
15.02.89 Patentblatt 89/07

(45) Bekanntmachung des Hinweises auf die
Patenterteilung:
27.03.91 Patentblatt 91/13

(84) Benannte Vertragsstaaten:
AT ES FR GB IT SE

(56) Entgegenhaltungen:
DE-A- 3 151 056
DE-A- 3 312 673

(56) Entgegenhaltungen:
PATENT ABSTRACTS OF JAPAN, Band 3, Nr.
134 (M-79), 9. November 1979, 139 M 79; JP-
A-54110559 (YAMATAKE HONEYWELL) 30-
08-1979

(73) Patentinhaber: EMAG MASCHINENFABRIK
GMBH
Austrasse 24
W-7335 Salach/Württemberg (DE)

(72) Erfinder: Schmidt, Rudolf
Weinbergstrasse 37/1
W-7313 Reichenbach (DE)

(74) Vertreter: Zmyj, Erwin, Dipl.-Ing.
Rosenheimer Strasse 52
W-8000 München 80 (DE)

## Beschreibung

Die Erfindung bezieht sich auf eine Vorrichtung zum Zentrieren und Spannen von Werkstücken gemägs dem Oberbegriff von Anspruch 1 mit drei um parallel zur Futterachse angeordneten Schwenkzapfen schwenkbar gelagerten Spannhebeln, die synchron antreibar sind und deren Schwenkzapfen von der Futterachse gleichen Abstand haben.

Bei der Bearbeitung von Werkstücken ist es bei der automatischen Zuführung der Rohteile erforderlich, die nacheinander auf einem Fördermittel ankommenden Werkstücke zu erfassen und in zentrierter Lage an einen Greifer einer Ladevorrichtung oder direkt an das Spannfutter einer Werkzeugmaschine zu übergeben. Zu diesem Zweck hat man am Ende eines Förderbandes oder eines Kettenförderers eine sogenannte Übergabekassette angeordnet, in die die einzelnen Werkstücke hineinbefördert werden und aus welcher die Werkstücke durch einen Greifer einer Ladevorrichtung übernommen werden können. Die Kassette ist häufig als Schwenkkassette ausgebildet, um die liegend angeförderten Werkstücke in eine aufrechte Lage zu bringen. Dabei weist die Kassette fest eingestellte Anschläge auf, die auf den jeweiligen Werkstückdurchmesser eingestellt sind, um das ankommende Werkstück, das durch das Fördermittel gegen die Anschläge gedrückt wird, für eine zentrische Übergabe an den Greifer zu zentrieren. Nachteilig bei solchen Übergabekassetten ist die Tatsache, daß diese nur auf ein Werkstück eines bestimmten Durchmessers eingerichtet sind und daß beim Übergang auf andere Werkstücke die Kassette gewechselt werden muß, was nicht nur zeitraubend sondern auch äußerst beschwerlich ist, weil sich diese Übergabekassetten hinter dem Bearbeitungsraum befinden und der Bedienende das Auswechseln entweder von oben durch eine entsprechende Einstiegsluke oder durch den Arbeitsraum der Werkzeugmaschine hindurch vornehmen muß. Hierbei müssen nicht nur Sicherheitsvorkehrungen getroffen werden, um eine Verletzungsgefahr innerhalb des Arbeitsraumes zu vermeiden, sondern dieser Vorgang ist auch wegen der schwer zugänglichen Lage der Übergabekassette und der Tatsache, daß der Arbeitsraum durch Kühlmittel und Späne verschmutzt ist, beschwerlich.

Ein weiterer Nachteil dieser Übergabekassetten besteht darin, daß das Werkstück nur an Anschlägen anliegt und nicht gespannt ist, so daß bei der Übergabe an ein Greiferfutter darauf geachtet werden muß, daß sich das Werkstück nicht von seinen Anschlägen bewegt, bevor es sicher vom Greiferfutter erfaßt ist.

Aufgabe der Erfindung ist es, eine Vorrichtung zum Zentrieren und Spannen von Werkstücken wie zum Beispiel aus der DE-A-3151056 bekannt zu schaffen, bei der die Werkstücke in einem großen Durchmesserbereich gespannt und zentriert werden können, wobei jedoch die Möglichkeit bestehen soll, die Werkstücke quer zur Futterachse in diese Vorrichtung einzubringen. Es muß also die Möglichkeit bestehen, die Werkstücke seitlich in die Spannvorrichtung einzuführen und sie dann zu zentrieren, ohne daß beim Spannvorgang die Werkstücke aus dem Zentrum der Spannvorrichtung herausgedrückt werden können.

Diese Aufgabe wird durch die im Anspruch 1 angegebenen Mittel gelöst.

Durch diese Ausgestaltung ist es möglich, Werkstücke mit unterschiedlichen Durchmessern, beispielsweise von 30 bis 160 mm Durchmesser quer zur Futterachse in diese Spannvorrichtung einzubringen, zu zentrieren und sicher zu halten. Bei Anordnung dieser Vorrichtung auf einer schwenkbar gelagerten Klappe zur Verwendung als Universalkassette bei einer Werkstückübergabestation, zur Übergabe von auf einem Fördermittel angeförderten Werkstücken an ein Greiferfutter einer Ladevorrichtung für eine Werkzeugmaschine ist es dann nicht mehr notwendig, die Spannvorrichtung bzw. Übergabekassette beim Übergang von einem Werkstück auf ein Werkstück mit einem anderen Durchmesser diese Kassette auszuwechseln. Die eingangs erläuterten Nachteile hinsichtlich Arbeitsaufwand, Betriebsunterbrechung und Gefährdung des Bedienenden sind somit vermieden.

Aufgrund der Gestaltung der Anlageflächen der Spannhebel wird erreicht, daß ein quer zur Futterachse in die Vorrichtung ungenau im Hinblick auf das Zentrum dieser Vorrichtung eingeschobenes Werkstück von den Spannhebeln stets in Richtung des Zentrums gedrückt wird, ohne daß die Gefahr eines Herausschiebens des Werkstückes aus der Spannvorrichtung besteht. Diese ungenaue Lage kann dadurch auftreten, daß das Werkstück einerseits auf dem Fördermittel nicht exakt geführt werden kann und andererseits dadurch, daß die Spannvorrichtung weiter geöffnet ist, als dies im gespannten Zustand der Fall ist, so daß das Werkstück durch das Fördermittel über das Zentrum hinaus geschoben wird.

Vorzugsweise schließen die Verbindungslinien der Achsen der Schwenkzapfen mit der Futterachse einen Winkel von 90° ein. Hierdurch ergibt sich eine besonders günstige Ausgestaltung hinsichtlich der sicheren Spannung und Zentrierung von Werkstücken mit kleinen bis hin zu sehr großen Durchmessern.

Um Kippkräfte beim Spannen der Werkstücke zu vermeiden, liegen die beiden einem Schwenkzapfen zugeordneten Spannhebel übereinander und sind im Lagerbereich nach Art einer Zange im wesentlichen jeweils um die halbe Spannhebeldicke ausgespart. Hierdurch befinden sich die am Werkstück angreifenden Anlageflächen der Spannhebel in der gleichen Ebene.

Um Werkstücke mit kleinem Durchmesser spannen zu können, ohne daß sich die langen Spannhebel gegenseitig stören, ist der einzeln gelagerte Spannhebel ausgehend von der konvexen Anlagefläche in Richtung auf seine Lagerung konkav ausgespart. Hierdurch ist der Schwenkbereich des mit seiner Anlagefläche zwischen den beiden anderen Spannhebeln liegende Spannhebel in seinem Schwenkbereich nicht gestört.

Eine einfache und zuverlässige Ausgestaltung des Antriebs zum synchronen Verschwenken der Spannhebel ergibt sich aus der vorteilhaften Ausgestaltung gemäß Anspruch 5.

Die Erfindung wird nachstehend anhand eines in der Zeichnung dargestellten Ausführungsbeispieles näher erläutert.

In der Zeichnung zeigen :

Fig. 1 eine Draufsicht auf eine Vorrichtung zum Zentrieren und Spannen von Werkstücken in einer Spannlage für den kleinsten Werkstückdurchmesser ;

Fig. 2 diese Vorrichtung in einer vollständig geöffneten Lage der Spannhebel ;

Fig. 3 eine der Fig. 1 entsprechende Draufsicht ohne Spannhebel ; und

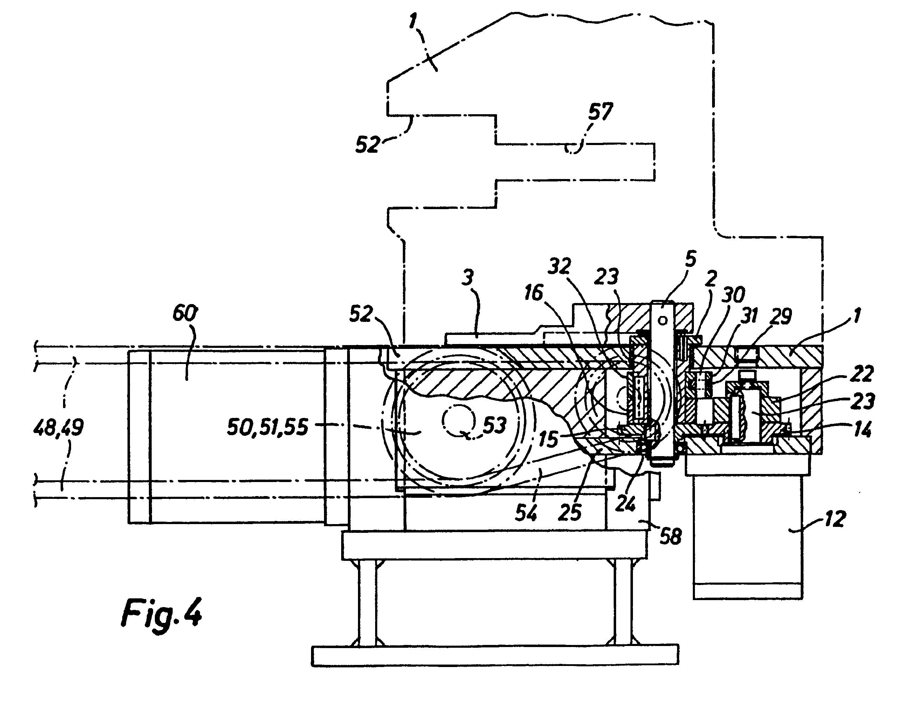

Fig. 4 eine gemäß Schnittlinie IVa-IVa der Fig. 3 teilweise geschnittene Seitenansicht in Richtung des Pfeiles IV in Fig. 3.

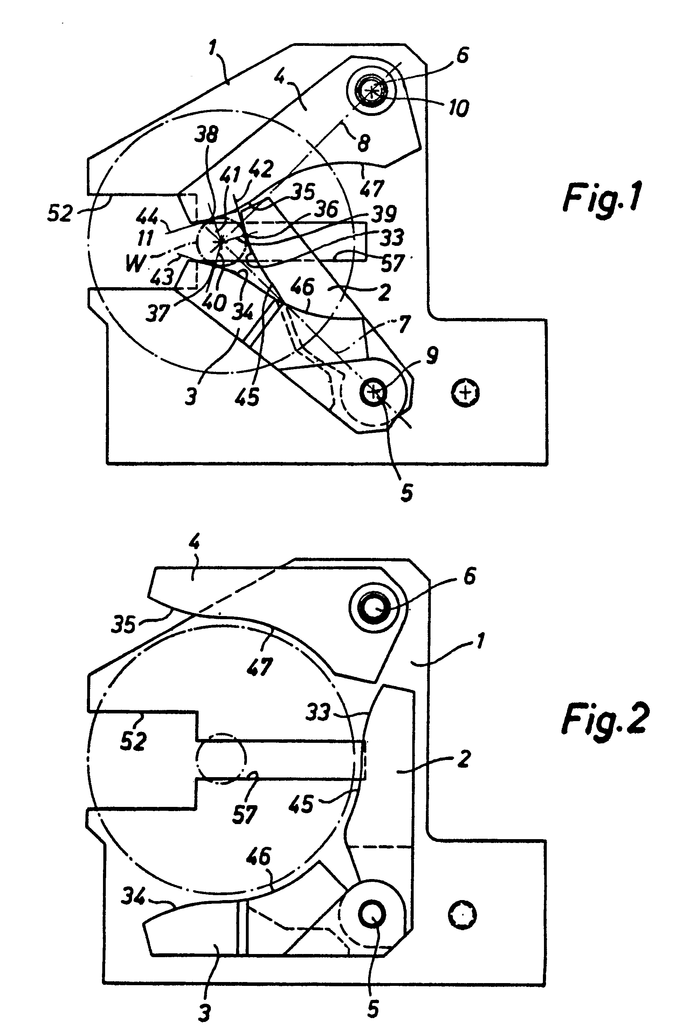

Wie aus den Fig. 1 und 2 ersichtlich, die die Vorrichtung in ihren beiden äußersten Spannlagen zeigt, sind auf einer Grundplatte 1 drei Spannhebel 2, 3 und 4 schwenkbar gelagert, wobei die Spannhebel 2 und 3 gemeinsam auf einem Schwenkzapfen 5 und der Spannhebel 4 auf einem anderen Schwenkzapfen 6 gelagert ist. Die Schwenkzapfen 5 und 6 sind so angeordnet, daß die Verbindungslinien 7 und 8, die die Drehachsen 9 und 10 dieser Schwenkzapfen 5 und 6 mit dem Zentrum 11 des Futters verbinden, einen Winkel von 90° einschließen. Die Schwenkzapfen 5 und 6 haben zum Zentrum 11 den gleichen Abstand. Die Spannhebel 2, 3 und 4 sind so lang, daß sie über das Zentrum 11 hinausgreifen.

Zum Antrieb der Schwenkhebel ist an der den Spannhebeln abgewandten Seite der Grundplatte 1 ein Antriebsmotor 12, beispielsweise ein Hydromotor oder ein spezieller Elektromotor, angeordnet, der auf seiner Antriebswelle 13 ein Ritzel 14 trägt, mit der er drehfest verbunden ist. Dieses Ritzel 14 kämmt mit einem Zahnrad 15, das auf dem Schwenkzapfen 5 drehfest angeordnet ist. Der Spannhebel 2 ist drehfest mit dem Schwenkzapfen 5 verbunden und wird so beim Drehen des Elektromotors 12 aufgrund der Antriebsverbindung 14, 15 verschwenkt.

Da der Spannhebel 3 eine in bezug auf den Spannhebel 2 entgegengesetzte Schwenkbewegung beim Öffnungs- und Spannvorgang ausüben muß, ist auf dem Schwenkzapfen 5 oberhalb des Zahnrades 15 eine Nockenscheibe 16 drehfest mit dem Schwenkzapfen 5 verbunden, an deren Nocken 17 eine Schubstange 18 mittels eines Gelenkbolzens 19 gelenkig angreift. Mit ihrem anderen Ende greift die Schubstange 18 über einen Gelenkbolzen 20 gelenkig an einen Nocken 21 einer Nockenscheibe 22 an, die koaxial zum Ritzel 14 drehfest auf der Antriebswelle 13 angeordnet ist. Die Nockenscheibe 16 ist drehfest mit dem zweiten, koaxial zum Spannhebel 2 auf dem Schwenkzapfen 5 drehbar gelagerten Spannhebel 3 verbunden. Da sich die Antriebswelle 13 aufgrund der Zahnradverbindung 14, 15 in einem entgegengesetzten Sinne zum Schwenkzapfen 5 dreht, wird durch die Schubstange 18, die die Drehbewegung der Antriebswelle gleichsinnig überträgt, der mit der Schubstange 18 gekuppelte Spannhebel 3 entgegengesetzt zum Schwenkhebel 2 verschwenkt. Der Schwenkzapfen 5 ist einerseits in einer Lagerbuchse 23 in der Grundplatte 1 und andererseits in einem Kugellager 24 drehbar gelagert, das in einem unter der Grundplatte 1 angesetzten Gehäuse 25 angeordnet ist.

Zum Antrieb des Spannhebels 4 ist mit dem Schwenkzapfen 5 eine weitere Nockenscheibe 26 drehfest verbunden, an deren Nocken 27 mittels eines Gelenkbolzens 28 eine Schubstange 29 gelenkig angreift, die mittels eines Gelenkzapfens 30 an einem Nocken 31 einer Nockenscheibe 32 angelenkt ist, die drehfest mit dem Spannhebel 4 verbunden ist. Aufgrund dieser Anordnung führen die Spannhebel 2 und 4 gleichsinnige und der Spannhebel 3 hierzu eine gegensinnige Bewegung aus.

Die Schwenkhebel 2 bis 4 weisen im vorderen Bereich konvex ausgebildete Anlageflächen 33, 34 und 35 auf, die sich nahezu über die halbe freie Länge des jeweiligen Spannhebels erstrecken. Mit diesen Anlageflächen werden die zu spannenden und zu zentrierenden Werkstücke erfaßt. Die Formgebung dieser Anlageflächen ist so gewählt, daß im jeweiligen Berührungspunkt 36, 37 und 38 mit einem Werkstück W die durch diesen Punkt und das Zentrum 11 gelegten Geraden 39, 40 und 41 senkrecht auf der an die Anlagefläche in diesem Punkt gelegte Tangente 42, 43 und 44 steht. Da die Verbindungsgeraden 40 und 41 von der Seite der Schwenkzapfen 5 und 6 aus betrachtet einen Winkel einschließen, der größer als 180° ist, wird auf auf das Werkstück W von sämtlichen Spannhebeln eine auf das Zentrum 11 gerichtete Kraft erzeugt, wodurch das Werkstück unabhängig von seiner beim Einführen in die Vorrichtung vorhandenen Lage zwangsläufig in das Zentrum gedrängt wird. Hierdurch ist immer eine zentrische Spannung des Werkstückes unabhängig von seinem Durchmesser gewährleistet.

Die Spannhebel 2, 3 und 4 weisen in dem an die Anlageflächen 33, 34, 35 in Richtung auf die Lagerung angrenzenden Bereich konkav ausgebildete Flächen 45, 46 und 47 auf, die Kreisbogenform haben, woraus sich eine zunehmende Breite der Schwenkhebel in Richtung auf die Schwenkachse ergibt, wodurch die Spannhebel dem in Richtung auf die Drehachse anwachsenden Biegemoment entsprechend gestaltet sind. Außerdem wird hierdurch auch das Einschieben von Werkstücken mit sehr großen Durchmesser ermöglicht, da diese Flächen 45 bis 47 trotz der Zunahme der Spannhebelbreite Aussparungen darstellen. Die Aussparung 47 ermöglicht ein Vorbeischwenken des Spannhebels 2 gegenüber dem Spannhebel 4.

Die weiter oben beschriebene Vorrichtung findet im dargestellten Ausführungsbeispiel eine Anwendung als Universalkassette zum Überführen von Werkstücken von einem Kettenförderer zu einem Greifer einer Ladevorrichtung oder zum Abführen des Werkstückes vom Greifer einer Ladevorrichtung zu einem Fördermittel, beispielsweise einem Kettenförderer.

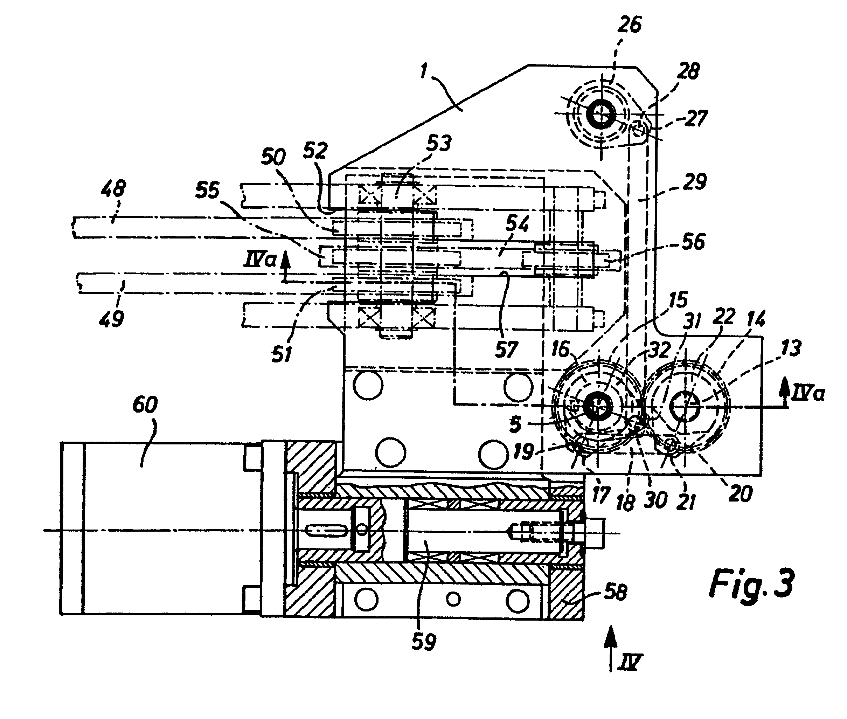

Wie insbesondere aus Fig. 3 ersichtlich, umfaßt ein Kettenförderer zwei Förderketten 48 und 49, die bis in den Bereich der Grundplatte 1 reichen und über Kettenräder 50 und 51 geführt sind, die unterhalb eines Ausschnittes 52 in der Grundplatte 1 auf einer Welle 53 drehbar gelagert sind. Die am anderen Ende der Förderketten 48 und 49 angeordneten Kettenräder sind in der Zeichnung nicht dargestellt. Die Kettenräder 50 und 51 weisen einen so großen Abstand zueinander auf, daß zwischen diesen Ketten eine weitere Förderkette 54 Platz hat, die einerseits über ein Kettenrad 55, welches ebenfalls auf der Welle 53 gelagert ist und andererseits über ein unterhalb der Grundplatte 1 gelagertes Kettenrad 56 geführt ist. Im Bereich dieser Förderkette ist ein der Breite der Förderkette 54 im wesentlichen entsprechender Ausschnitt 57 in der Grundplatte 1 vorgesehen. Durch die Förderketten 48 und 49 wird ein Werkstück auf die Grundplatte 1 bis in den Bereich des Ausschnittes 52 gefördert. Dort wird das Werkstück von der Einzelkette 54 übernommen und gegen den Spannhebel 2 gedrückt, der sich, wie auch die beiden anderen Spannhebel, im geöffneten Zustand entsprechend Fig. 2 befindet. Die Förderketten greifen durch die Ausschnitte 52 und 57 geringfügig hindurch, so daß das Werkstück auch im Bereich der Grundplatte 1 von den Förderketten getragen ist. Wenn das Werkstück an dem geöffneten Spannhebel 2 anliegt, werden die Spannhebel mittels des Antriebsmotors 12 verschwenkt, wobei das Werkstück aufgrund der Ausgestaltung der Anlageflächen 34, 35 und 36 in das Zentrum der Spannvorrichtung gedrückt und dort festgespannt wird.

Zur Übergabe des Werkstückes an ein Greiferfutter einer Ladevorrichtung ist die Grundplatte 1 mittels einer in einem maschinenfesten Gestell 58 gelagerten Welle 59 schwenkbar gelagert, die durch einen Elektromotor 60 um 90° gedreht werden kann, so daß die Grundplatte 1 ebenfalls eine Schwenkbewegung um 90° aus der horizontalen Lage in eine vertikale Lage ausführt, in der das durch die Spannhebel 2, 3 und 4 gespannte Werkstück an ein Greiferfutter übergeben oder von einem Greiferfutter übernommen werden kann.

Da mit Hilfe der im Ausführungsbeispiel dargestellten Vorrichtung Werkstücke mit Durchmessern zwischen etwa 30 und 160 mm zentriert und gespannt werden können, entfällt das bisher zeitraubende und lästige Auswechseln von Übergabekassetten. Bei anderen Abmessungen sind andere Durchmesserbereiche erfaßbar.

## Ansprüche

1. Vorrichtung zum Zentrieren und Spannen von Werkstücken (W) mit drei um parallel zur Futterachse angeordneten Schwenkzapfen schwenkbar gelagerten Spannhebeln (2, 3, 4), die synchron antreibbar sind und deren Schwenkzapfen (5, 6) von der Futterachse gleichen Abstand haben, dadurch **gekennzeichnet**, daß zwei Schwenkzapfen (5, 6) vorgesehen sind, von denen ein Schwenkzapfen (5) zur Lagerung von zwei Spannhebeln (2, 3) dient, daß die Länge der Spannhebel (2, 3, 4) größer ist, als dies dem Abstand des Schwenkzapfens (5, 6) zur Futterachse (11) entspricht, daß die Verbindungslinien der Achsen beider Schwenkzapfen (5, 6) mit der Futterachse (11) einen Winkel einschließen, der kleiner oder gleich 180° ist, daß die Anlageflächen (33, 34, 35) der Spannhebel (2, 3, 4) zum Erfassen der Werkstücke (39) derart konvex gestaltet sind, daß die im jeweiligen Anlagepunkt (36, 37, 38) an den Werkstücken senkrecht zu den Tangenten (42, 43, 44) stehenden Geraden (39, 40, 41) durch die Futterachse (11) verlaufen und daß die die Anlagepunkte (37, 38) der beiden außen liegenden Spannhebel (3, 4) mit der Futterachse (11) verbindenden Geraden (40, 41) von der Seite der Schwenkzapfen (5, 6) aus betrachtet einen Winkel von mindestens 180° einschließen.

2. Vorrichtung nach Anspruch 1, dadurch **gekennzeichnet**, daß die Verbindungslinien (7, 8) der Achsen der Schwenkzapfen (5, 6) mit der Futterachse (11) einen Winkel von 90° einschließen.

3. Vorrichtung nach Anspruch 1 oder 2, dadurch **gekennzeichnet**, daß die beiden einem Schwenkzapfen (5) zugeordneten Spannhebel (2, 3) übereinander liegen und im Lagerbereich nach Art einer Zange jeweils um die halbe Spannhebeldicke ausgespart sind.

4. Vorrichtung nach einem der Ansprüche 1 bis 3, dadurch **gekennzeichnet**, daß der einzeln gelagerte Spannhebel (4) ausgehend von der konvexen Anlagefläche (35) konkav (47) ausgespart ist.

5. Vorrichtung nach einem der Ansprüche 1 bis 4, dadurch **gekennzeichnet**, daß der erste (2) der beiden koaxial zueinander gelagerten Spannhebel (2, 3) mit einem Zahnrad (15) drehfest verbunden ist, das mit einem Antriebsritzel (14) eines Antriebsmotors (12) kämmt, daß der zweite Spannhebel (3) mit einer gegenüber dem Schwenkzapfen (5) drehbar gelagerten Nockenscheibe (16) drehfest verbunden ist, an deren Nocken (17) eine Schubstange (18) gelenkig (19) angreift und mit ihrem anderen Ende gelenkig (21) mit einem Nocken (20) einer Nockenscheibe (22) verbunden ist, die drehfest mit dem Antriebsritzel (14) in Verbindung steht und daß koaxial zum Zahnrad (15) eine dritte Nockenscheibe (32) drehfest mit der ersten Nockenscheibe (16) verbunden ist, die über eine gelenkig (28) an ihr angreifende Schubstange (29) mit einer weiteren Nockenscheibe (32) gelenkig (30) verbunden ist, die dem einzeln gelagerten Spannhebel (4) drehfest zugeordnet ist.

6. Anordnung der Vorrichtung nach einem der Ansprüche 1 bis 5 auf einer schwenkbar gelagerten Klappe (1) zur Verwendung als Universalkassette bei einer Werkstückübergabestation zur Übergabe von auf einem Fördermittel (45, 46, 50) angeförderten Werkstücken (W) an ein Greiferfutter einer Ladevorrichtung für eine Werkzeugmaschine oder zur Übergabe der Werkstücke vom Greiferfutter auf ein Fördermittel.

## Claims

1. Device for centring and clamping workpieces (W), having three clamping levers (2, 3, 4) which are mounted pivotally about pivot pins arranged parallel to the chuck axis and which may be driven synchronously and whereof the pivot pins (5, 6) have the same spacing from the chuck axis, characterized in that two pivot pins (5, 6) are provided, of which one pivot pin (5) serves for the mounting of two clamping levers (2, 3), in that the length of the clamping levers (2, 3, 4) is greater than the spacing of the pivot pins (5, 6) to the chuck axis (11), in that the lines connecting the axes of the two pivot pins (5, 6) to the chuck axis (11) enclose an angle less than or equal to 180°, in that the bearing faces (33, 34, 35) of the clamping levers (2, 3, 4) are convexly formed, for the purpose of gripping the workpieces (39), such that the straight lines (39, 40, 41), perpendicular to the tangents (42, 43, 44), at the respective point (36, 37, 38) of bearing against the workpieces run through the chuck axis (11), and in that the straight lines (40, 41) connecting the points (37, 38) of bearing of the two outer clamping levers (3, 4) to the chuck axis (11), as seen from the pivot pins (5, 6) side, enclose an angle of at least 180°.

2. Device according to Claim 1, characterized in that the lines (7, 8) connecting the axes of the pivot pins (5, 6) and the chuck axis (11) enclose an angle of 90°.

3. Device according to Claim 1 an 2, characterized in that the two clamping levers (2, 3) associated with one pivot pin (5) lie one above the other and are recessed in the mounting region in the manner of a pair of tongs, in each case by half the thickness of the clamping lever.

4. Device according to one of Claims 1 to 3, characterized in that the clamping lever (4) mounted alone is recessed concavely (47), starting from the convex bearing face (35).

5. Device according to one of Claims 1 to 4, characterized in that the first (2) of the two mutually coaxially mounted clamping levers (2, 3) is connected in fixed rotation to a toothed wheel (15) which meshes with a driving pinion (14) of a drive motor (12), in that the second clamping lever (3) is connected in fixed rotation to a cam disc (16) mounted rotatably with respect to the pivot pin (5), a slide rod (18) acting articulatedly (19) on the cam (17) of this cam disc, and its other end being connected articulatedly (21) to a cam (20) of a cam disc (22) which is connected in fixed rotation to the driving pinion (14), and in that a third cam disc (32) is connected, coaxially to the toothed wheel (15), in fixed rotation to the first cam disc (16), which is articulatedly (30) connected via a slide rod (29) acting articulatedly (28) thereon to a further cam disc (32) which is associated in fixed rotation with the clamping lever (4) mounted alone.

6. Arrangement of the device according to one of Claims 1 to 5 on a pivotally mounted flap (1) for use as a universal cartridge in a workpiece transfer station for transferring workpieces (W) conveyed on a conveying means (45, 46, 50) to a gripper chuck of a loading device for a machine tool or for transferring the workpieces from the gripper chuck onto da conveying means.

## Revendications

1. Dispositif pour le centrage et le serrage de pièces (W) muni de trois leviers de serrage (2, 3, 4) en oscillation autour de pivots disposés parallèlement à l'axe de mandrin, lesdits leviers étant entrainés de façon synchrone et ayant leurs pivots (5, 6) disposés à la même distance par rapport à l'axe de mandrin, caractérisé en ce qu'il comporte deux pivots (5, 6) dont l'un (5) sert de coussinet pour deux leviers de serrage (2, 3) ; en ce que la longueur des leviers de serrage (2, 3, 4) est plus grande que celle correspondant à la distance des pivots (5, 6) par rapport à l'axe (11) de mandrin ; en ce que les lignes de liaison des axes des deux pivots (5, 6) font avec l'axe (11) de mandrin un angle inférieur ou égal à 180°C ; en ce que les surfaces d'appui (33, 34, 35) des leviers de serrage (2, 3, 4) pour la saisie des pièces (39) ont une forme convexe ; que les droites (39, 40, 41) passant par l'axe (11) du mandrin et rejoignant chacun des points de contact (36, 37, 38) sur les pièces (39) se trouvent perpendiculaires aux tangentes (42, 43, 44) ; et en ce que les droites (40, 41) du côté des pivots (5, 6) et qui passent par l'axe de mandrin (11) et relient les points de contact (37, 38) des deux leviers de serrage (3, 4) disposés à l'extérieur, forment un angle d'au moins 180 degrés.

2. Dispositif selon la revendication 1, caractérisé en ce que les lignes (7, 8) reliant les axes des pivots (5, 6) avec l'axe de mandrin (11) font un angle de 90 degrés

3. Dispositif selon l'une quelconque des revendications 1 ou 2, caractérisé en ce que les deux leviers de serrage (2, 3) coordonnées sur un pivot (5), sont en chevauchement et sont évidés sur leurs faces en appui à la façon d'une tenaille, selon la moitié de l'épaisseur des leviers.

4. Dispositif selon l'une quelconque des revendications 1 à 3, caractérisé en ce que le levier de serrage unique isolé (4) est évidé en une forme concave (47) à la sortie de la surface convexe (35).

5. Dispositif selon l'une quelconque des revendications 1 à 4, caractérisé en ce que le premier (2) des deux leviers de serrage (2, 3) en position co-axiale est relié, en résistant à la torsion, à une roue dentée (15) qui engrène avec un pignon d'attaque (14) d'un moteur d'entrainement (12) ; en ce que le deuxième levier de serrage (3) est relié, de manière résistant à la torsion, à un disque à cames (16) pouvant tourner face au pivot (5), une bielle (18) se trouvant en prise de façon articulée avec les mentonnets (17) du disque à cames, l'autre extrémité de la bielle étant reliée, également en articulation, avec un mentonnet (20) du disque à cames (22) qui est assujetti, sans torsion, au pignon d'attaque (14) ; et en ce que, coaxialement à la roue dentée (15), est prévu un troisième disque à cames (32) sans rotation, relié au premier disque à cames (16) et qui, sur une bielle (29) en prise articulée (28) sur ce disque (32) est reliée par articulation (30) à un autre disque à cames (32) lequel est coordonné rigidement au levier de serrage individuel (4)

6. Installation du dispositif selon l'une quelconque des revendications 1 à 5 sur un volet à pivotement (1) pour l'utilisation comme cartouche universelle dans un poste de transfert de pièces à usiner, pour le transfert des pièces (W) nécessaires sur un moyen d'acheminement (45, 46, 50) à un mandrin de préhension d'un dispositif d'alimentation pour une machine-outil ou encore pour le transfert de pièces à usiner depuis un mandrin de préhension jusqu'à un moyen d'acheminement.

Fig.1

Fig.2

Fig.3

EP 0 303 000 B1

Fig.4